# EUROPEAN PATENT SPECIFICATION

(11) **EP 3 171 689 B1**
(45) Date of publication and mention of the grant of the patent: **27.02.2019**
(21) Application number: 15738426.4
(22) Date of filing: 07.07.2015
(51) Int. Cl.: A01G 31/04

(54) **FARMING SYSTEMS**
LANDWIRTSCHAFTLICHE SYSTEME
SYSTÈMES AGRICOLES

(30) Priority: 24.07.2014 GB 201413112
(43) Date of publication of application: 31.05.2017
(73) Proprietor: Lodge, Jonathan, Farnham Royal, Buckinghamshire SL2 3SF (GB)
(72) Inventor: Lodge, Jonathan, Farnham Royal, Buckinghamshire SL2 3SF (GB)
(74) Representative: ip21 Ltd
(86) International application number: PCT/GB2015/051965
(87) International publication number: WO 2016/012748

(56) References cited:
- WO-A1-2006/065210
- CN-A- 102 369 849
- DE-A1- 2 128 474
- FR-A1- 2 345 912
- FR-A1- 2 980 953
- GB-A- 984 404
- GB-A- 1 041 883
- US-A- 3 254 447
- US-A- 5 943 818
- US-A1- 2012 324 788

## Description

### Field of the Invention

The present invention relates to a method of growing vegetables and an apparatus for use in growing a plant. The invention finds particular use where the available area for growing is limited, and especially on a rooftop of a building.

### Background to the Invention

Given an increasing need to produce more food crops from a decreasing area of available land, and also to use as little as possible fossil fuel-derived energy as possible in that production, many different techniques have been developed which improve yield per m² with minimal energy input. Additionally, techniques have been developed enabling previously unusable areas to support crops.
For example, particularly in urban environments, roofs of buildings are increasingly being used to grow crops. Where the rooftop is capable of supporting the weight, conventional greenhouses can be erected. Alternatively, containers or raised beds are located on a strong flat roof and growing carried out in a manner used in conventional rural market gardens.

Two prior art documents are acknowledged: FR 2345912 (Cuvillier Gerard); and CN 102369849 (Zhicheng Wu). FR 2345912 describes an apparatus for the hydroponic culture of plant roots, and CN 102369849 describes a three-dimensional planting device having a conveying wheel assembled on a rail frame to be erected in position on balconies, rooves, external walls and the like.
In attempting to utilise roof space, then for an enterprise to be run commercially, one problem which needs to be addressed is that of tending and harvesting the crop. Many supermarkets have rooftop areas available. In a recent calculation, there were 2160 supermarkets, each having in excess of 5000 m² available. The use of this area could be exploited by utilising modern polytunnel structures with a potential capacity of such a supermarket to grow crops to value of £3 million per year. The process would benefit from directing the heat and carbon dioxide from boiler flue gases into the polytunnels so improving conditions for growth.
However, simply to utilise polytunnels as part of commercial rooftop farming enterprise retains the problem of land-based enterprises in that access is still required for farming machinery and for the workforce. The need for access removes a relatively large area from availability for cultivation. Additionally when working in a rooftop environment, safety measures need to be undertaken to minimise the risk of falling from the rooftop, particularly of personnel, but also of equipment and materials. Moreover, the use of polytunnels is not suitable where the rooftop is pitched and is not a horizontal flat roof.
One solution to the access problem uses hydroponics to deliver water and nutrients to the plants. There are two basic variants of hydroponics. In the first variant, individual pots containing plants are linked to an array of pipes which delivers what is required by the plant for growth. Due to the time required to set the pipework up, this variant is more advantageous for plant crops with a long growing period such as tomatoes. However, because of the need for access, not just to the crop but also to the pipework, a relatively large access area is still required. The second variant, which is often used for crops with a short growth cycle, such as salad leaf crops, utilises polystyrene trays which float in tanks holding nutrient enriched water. The tanks are usually relatively long, with the trays floating adjacent to each other from a first end when the plants are young, to a second end where the plants are grown and can be harvested. The nature of this second variant restricts growing crops to a single layer.

The present invention seeks to address the above problems by providing an apparatus for growing crops suitable for use on a rooftop, which improves space utilisation and also safety of personnel. The apparatus is also suitable for use in conjunction with sloping roofs.

### Summary of the Invention

In the invention there is provided an apparatus for use in growing a plant crop, according to claim 1.

The apparatus enables a crop to be grown within a relatively small volume, with minimal input from an operative.
Optionally, the suspension means includes a framework to hold one or more containers which enables the crops to be removed, together with the container for further transportation and for a new crop to be relatively easily added to pass through the apparatus. Further optionally, the suspension means includes a bar or axle attached to and extending between the belts to provide a secure support.

Each belt is mounted to a drive sprocket, yet further the path of the or each belt is defined by a plurality of idler cogs which additionally provide support to the belts. Further conveniently, the drive sprockets are located within the structure. The drive belts are preferably chains.
The apparatus preferably includes sensors, such as temperature or humidity sensors said sensors being connected to a display enabling an operative to control the environment within the structure. Optionally, the sensors are linked to a processing means and a control means to enable the environment within the structure to be controlled automatically.
Optionally, one or more cameras are located within the structure to provide a visual image and/or record of the growth of the plants.
Preferably, one or more lasers are mounted within the structure to enable growth control of plant materials within the structure and reduce the requirement for herbicides during the growth of a crop.
The apparatus preferably includes a pump to respectively fill and empty the trough.

The floor of the structure consists of a building roof which can enable crops to be grown close to a point of sale in an urban environment.

In the invention there is provided a method of growing plants, according to claim 12.

### Brief Description of the Drawings

The invention is now described with reference to the accompanying drawings which show by way of example only, one embodiment of a farming system. In the drawings:
Figure 1 is a diagrammatic illustration of a building including a rooftop farming system in accordance with the invention;
Figure 2 is a side view of the building and system of Figure 1;

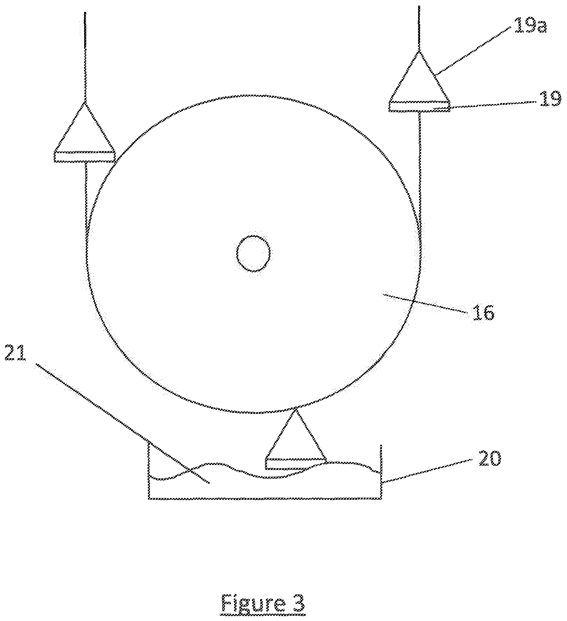

Figure 3 is a diagrammatic illustration, not to scale, of trays and a nutrient trough; and
Figure 4 illustrates a tray suspended between drive chains.

### Detailed Description of the Invention

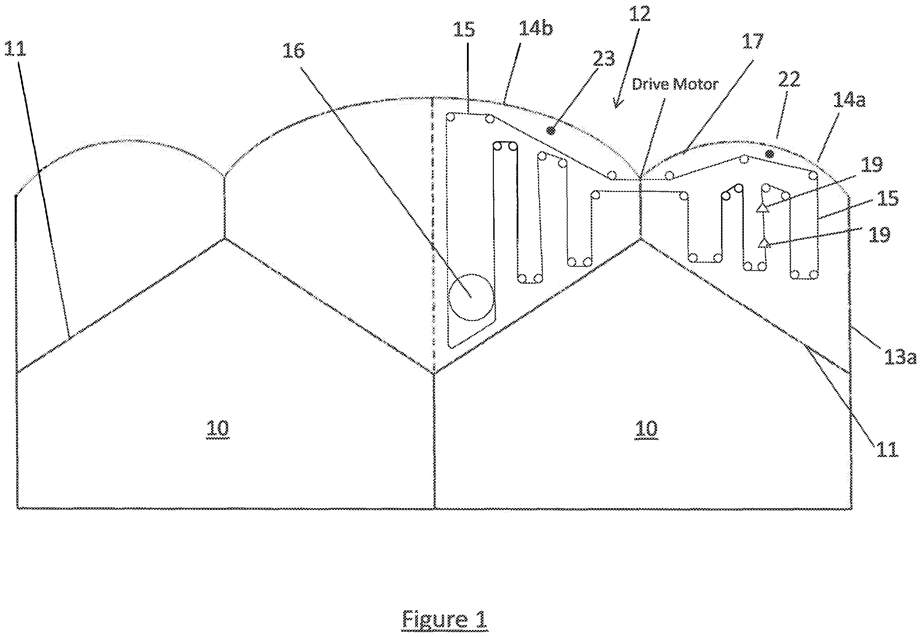

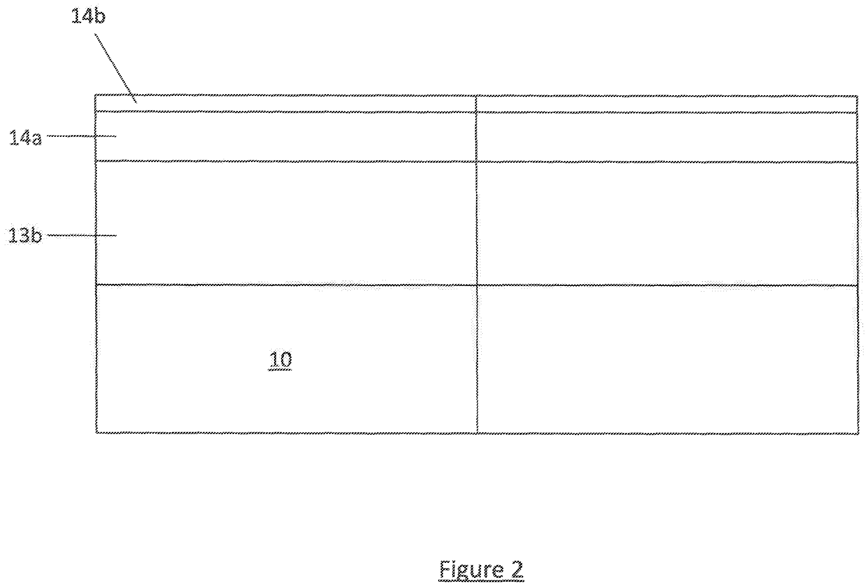

Referring to figures 1 and 2, these illustrate a modular system located on the rooftop of a building. The building rooftop is of design which is common for modern warehouses and also supermarkets, especially those constructed as part of a purpose-built industrial retail park. In such buildings a basic steel frame is erected and cold-rolled steel purlins bolted thereto. The purlins are then covered with the insulated steel profile sheets. Larger buildings can be put together with several low pitched bays.

The modules erected on the roof 11 of the building 10 can be installed to suit the frame of the building 10 and with minimal disturbance of the frame either during construction or subsequently. In addition, it is intended that the weight of a module be borne, where possible by that building frame. A basic module, generally referenced 12 therefore comprises a steel framework having walls and a roof made of a plastics material. The plastics material is known in the art and is already widely used for the construction of conventional polytunnels. Moreover, the plastics material is available as a roll, approximately two metres in width and the modules can be constructed using the known Keder method. In this method the framework of the module is erected, and includes regularly spaced arches across which the plastics material is attached to form a roof of the module. A roof can therefore be constructed from several strips of plastics material going across the width of the module or alternatively a single length of plastics material running the length of the module.

Within the module, an almost completely automated process enables the growing plant to be monitored, watered and fed, and harvested. Additionally, means are optionally included to control weeds and pests.

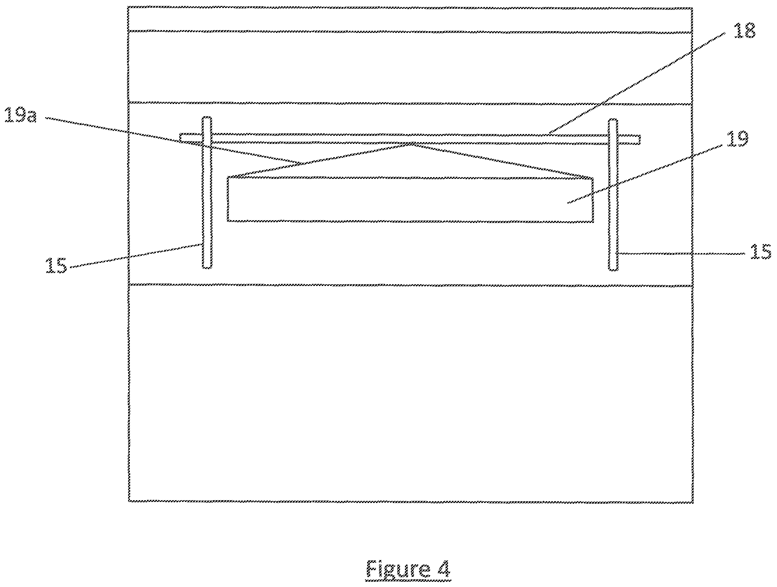

Within the internal volume of the module generally referenced 12, and defined by the building roof 11, module walls 13a, 13b and module roof 14a, 14b is maintained a controlled environment in which the crop is grown. A pair of parallel endless drive belts, or as herein exemplified, chains, approximately two metres apart, only one of which chains 15 is shown in Figure 1 for convenience, are utilised to transport plants through the module 12. The chain 15 is driven by a main drive cog 16 and the path of the chain is effectively determined by the idler sprockets 17. The drive cog 16 is driven by a motor located where shown in Figure 1. At spaced intervals along the chain 15, bars or axles 18 (see Figure 4) extend between and are fixed at either end to the chain 15. In an alternative embodiment, not illustrated, a cable or chain can replace the bar or axle.

In use, containers 19 in which plants are retained are suspended by cables 19a from the axles 18. In an advantageous embodiment, not illustrated the containers 19 are held in a common framework, enabling a container 19 to be removed, the crop harvested, a new crop planted in the container 19 and the container 19 then put back into a framework. In order to reduce costs therefore, it is envisaged that the framework is so sized as to accept an integer number, especially three, industry standard-sized containers. Such containers are available in a wide variety of shapes and sizes and can themselves carry smaller trays or pots. By using industry standard containers the costs are kept to a minimum. In particular, certain trays are available which hold potted plants such that the potted plants do not fall over and which fit into Danish trolleys, used within a supermarket or horticultural outlet. Although normally single use, trays can be reused with the present invention which again reduces costs.
It will be noted therefore that as the main drive cog 16 turns, the chain 15 and the containers 19 suspended therefrom are transported around the module 12 and the plants therefore are moved from one region of the module 12 to another. At defined points along this course, the light conditions, humidity etcetera can be monitored, and feeding and weed and pest control can be undertaken. The trays can be provided with RF tags or Bar/QR codes which can be read by sensors at various points, for example as a tray approaches a watering trough or a transfer point (see below).
One advantage of the invention disclosed herein over prior art systems is that of being able to be installed on roofs of different shapes and dimensions, without needing to manufacture elements specifically for that roof or plant crop. The configuration of the path of the chain 15 is determined by the idler sprockets 17 and therefore these can be positioned to suit the general roof shape and any other installations which maybe present on the roof 11.
The above system enables a much simplified watering and feeding regime to be implemented. Unlike prior art systems which require a large number of pipes and branches to water individual plant-containing pots or which require the pots to be located on a capillary matting, the present system can comprise a single watering point consisting of a trough 20. The trough 20 can be filled with water 21 and any nutrients for the particular plant and its stage of growth. Said trough can be filled either by hand or by utilising a pump. As the plant is moved along its path by the chain 15 the plant is dipped into the trough 20 thereby watering and/or feeding the plants. Should the particular plant require it, the movement of the chain 15 can be paused to ensure thorough watering.

Once the watering and/or feeding is completed for that container, the trough 20 can be emptied, again optionally by means of a pump, ready to receive fresh water and nutrients. As the containers move on, any excess water dripping from the plants runs back into the trough 20 and can be reused. An advantage of this method of watering is that as the water drains from the plant, air is sucked into the soil so enhancing the soil's ability to support growth.

In order to monitor the progress of the plants, sensors are installed at points within the module 12 and also cameras so that the visual status of the plants can be observed. In Figure 1, a number of detectors is shown. Firstly, a temperature indicator is shown at 22 and second a humidity indicator at 23. It should be appreciated that said detectors can be positioned elsewhere within the system as best determined on setting the system up. Conveniently sensors can be located in the region of the trough 20. The sensors can in particular include a barcode reader, camera or laser. The sensors are conveniently linked to a central processing and control unit which will be programmed to take the actions necessary to keep the values of various properties such as temperature within a preset range. Alternatively, the unit can simply provide read outs when it is required that the values be maintained manually.

The use of sensors not only allows for conditions to be controlled but also to provide information to retailers which they can use as a marketing tool within that business. Firstly, the data can be accumulated and can be used to enable the grower to build a knowledge base to aid in their understanding of how to manage conditions within the modules to ensure best growth.

Additionally, the data can be used to show customers either through labels on the goods or through screens throughout the store the provenance of the goods. A further use for the data would be as part of a smartphone app to enable customers/consumers to receive direct camera feeds to determine when a crop is ready. Also, crops at different stages of development can be harvested and brought down for educational purposes to show students in the building below.
Finally, the images from the cameras can be used to give a time lapsed film showing growth of a plant.

The information from the cameras can also be linked to a processor which is linked to a laser. The laser can be mounted at a convenient point within a module in line of sight of the trays/containers and because all the plants within a module pass that point, all the plants should at some time come within the line of sight of the lasers. The laser can then be used, under the control of a processor for example, to remove weeds or to trim unwanted roots, stems or leaves or perhaps to thin out plants in a tray. The requirement to use herbicide is therefore reduced.

Where space allows, modules can be located side by side along a roof and, assuming temperature requirements between adjacent modules allow it, share a common dividing wall. Depending on the crops being grown, adjacent modules can either share a watering trough or be provided with their own individual trough. In the former situation, coordination between chain movement and delivery of a crop to the common trough can be carried out to minimise the frequency of filling and emptying a trough, particularly where the same solutions are used for both crops. The use of individual troughs would of course remove the requirement for that level of coordination and would also enable the growing conditions for each crop to be individually optimised.

When using a plurality of modules there is an increased need to maximise the growing space available and also to enable the system to remain predominantly automated. To achieve this and to enable as high a density of plant growth as possible, a number of access points to a module is reduced to the minimum possible. Moreover, produce from each module is brought to a single access point, from where it can be removed from the roof to, for example, the supermarket floor. For convenience, an access point can be in the region of a trough 20. This facilitates the process of watering, weeding, pruning etc, as these actions can firstly be monitored visually in a control area, and secondly take place whilst the plants are stationary. In order to minimise the requirement for physical labour to be used to move produce, robotics and CNC machining techniques can be utilised to lift plant trays/containers from frames and to place them on a transport frame. The transport frame is then carried by means of a pair of chains that give a route across the roof to the access point. By suitable routing, a growing area of several thousand square metres can be accessed from a very small area, perhaps no larger than a lift shaft.

Again the use of a single access area provides a great deal of flexibility in respect of where said access area can be located within the building or whether even on the outside of the building. As long as the layout allows for an adequate corridor for the transport frame, the positioning of the access area to the ground floor can be anywhere on the corridor. Of course, where a system is installed at ground level, or on a rooftop on which human access is not restricted, then a crawler frame may not be required.

## Claims

1. An apparatus for use in growing a plant crop, the apparatus comprising a structure enclosing a volume (12) in which a crop can be maintained in a controlled environment during the growth of a crop,
the structure housing two endless belts (15) in spaced-apart parallel relationship and mounted for synchronous motion about a closed path,
a trough (20) to removably retain a nutrient solution for a crop,
suspension means to enable a container (19) holding a crop to be suspended between and move with the belts,
the paths of the belts being such as to at least partially immerse the container in nutrient solution (21) and feed a crop at least once on a complete belt circuit;
**characterised in that** each belt (15) is mounted to a drive sprocket (16) and the path of each belt (15) is defined by a plurality of idler cogs (17);
wherein the floor of the structure consists of a building roof (11) and the plurality of idler cogs (17) are positionable within the volume of the apparatus to suit the shape of the building roof (11) on which the apparatus is located; and
wherein the structure is formed of a plurality of modules which are installed so as to suit the shape of the building roof; wherein at least one of said modules comprises a single access point from where crops can be removed from the volume of the apparatus.

2. An apparatus according to Claim 1, wherein the suspension means includes a framework to hold one or more containers (10).

3. An apparatus according to Claim 1 or Claim 2, wherein the suspension means includes a bar or axle (18) attached to and extending between the belts to provide a secure support for the container (19).

4. An apparatus according to any preceding claim, wherein the drive sprockets (16) are located within the structure.

5. An apparatus according to any preceding claim, wherein the plurality of idler cogs (17) additionally provide support to the belts (15).

6. An apparatus according to any preceding claim, wherein the drive belt (15) is a drive chain.

7. An apparatus according to any preceding claim, wherein the apparatus includes sensors, such as temperature or humidity sensors (22, 23) said sensors being connected to a display enabling an operative to control the environment within the structure.

8. An apparatus according to Claim 7, wherein the sensors are linked to a processing means and a control means to enable the environment within the structure to be controlled automatically.

9. An apparatus according to any preceding claim, wherein one or more cameras are located within the structure to provide a visual image and/or record of the growth of the plants.

10. An apparatus according to any preceding claim, including a pump to fill and empty the trough (20) of nutrient liquid (21).

11. An apparatus according to any preceding claim, wherein one or more lasers are mounted within the structure.

12. A method of growing plants, the method comprising the steps of:
(i) providing a structure enclosing a volume in which a crop can be maintained in a controlled environment during the growth of a crop, wherein the floor of the structure consists of a building roof (11) and the structure is formed of a plurality of modules which are installed so as to suit the shape of the building roof, at least one of said modules comprising a single access point,
(ii) placing a plant into a container (19);
(iii) freely suspending the container (19) between two endless belts (15), said belts being arranged in spaced-apart parallel relationship and mounted to a drive sprocket (16) and a plurality of idler cogs (17) for synchronous motion about a closed path,
(iv) positioning the plurality of idler cogs (17) within the volume of the structure to suit the shape of the building roof (11) on which the structure is located,
(v) adding a nutrient solution (21) to a trough (20),
(vi) the path of the belts (15) being such as to at least partially immerse the container (19) and the plant in a nutrient solution (21) to feed and water the plant and then to remove the container (19) and plant from the nutrient solution (21),
(vii) the path being confined within a space having a controlled environment,
(viii) removing a crop from the volume of the structure via said single access point.

## Patentansprüche

1. Vorrichtung zur Verwendung beim Anbau einer Pflanzenkultur, die Vorrichtung umfassend eine Struktur, die ein Volumen (12) einschließt, in welchem eine Kultur während des Anbaus einer Kultur in einer kontrollierten Umgebung gehalten werden kann,
wobei in der Struktur zwei Endlosbänder (15) in beabstandeter paralleler Beziehung untergebracht und so montiert sind, dass sie eine synchrone Bewegung über einen geschlossenen Pfad ausführen,
einen Trog (20) zum entnehmbaren Aufnehmen einer Nährlösung für eine Kultur, Aufhängungsmittel, um es zu ermöglichen, dass ein Behälter (19), der eine Kultur hält, zwischen den Bändern gehalten und mit diesen bewegt wird,
wobei die Pfade der Bänder derart sind, dass sie den Behälter mindestens teilweise in Nährlösung (21) tauchen und eine Kultur bei einem vollständigen Bandkreislauf mindestens einmal nähren;
**dadurch gekennzeichnet, dass** jedes Band (15) an einem Antriebskettenrad (16) montiert ist und der Pfad jedes Bandes (15) durch eine Mehrzahl von Laufrollenzähnen (17) definiert ist;
wobei der Boden der Struktur aus einem Gebäudedach (11) besteht und die Mehrzahl von Laufrollenzähnen (17) innerhalb des Volumens der Vorrichtung positionierbar sind, um sich an die Form des Gebäudedachs (11) anzupassen, auf dem sich die Vorrichtung befindet; und
wobei die Struktur aus einer Mehrzahl von Modulen gebildet wird, die so installiert sind, dass sie sich an die Form des Gebäudedachs anpassen, wobei mindestens eines der Module einen einzigen Zugangspunkt umfasst, von dem aus Kulturen aus dem Volumen der Vorrichtung entnommen werden können.

2. Vorrichtung nach Anspruch 1, wobei die Aufhängungsmittel ein Gestell zum Halten von einem oder mehreren Behältern (10) enthalten.

3. Vorrichtung nach Anspruch 1 oder Anspruch 2, wobei die Aufhängungsmittel eine Schiene oder Achse (18) enthalten, die an den Bändern befestigt ist und zwischen ihnen verläuft, um eine sichere Unterstützung für den Behälter (19) bereitzustellen.

4. Vorrichtung nach einem der vorstehenden Ansprüche, wobei sich die Antriebskettenräder (16) innerhalb der Struktur befinden.

5. Vorrichtung nach einem der vorstehenden Ansprüche, wobei die Mehrzahl von Laufrollenzähnen (17) eine Unterstützung der Bänder (15) zusätzlich bereitstellen.

6. Vorrichtung nach einem der vorstehenden Ansprüche, wobei das Antriebsband (15) eine Antriebskette ist.

7. Vorrichtung nach einem der vorstehenden Ansprüche, wobei die Vorrichtung Sensoren enthält, zum Beispiel Temperatur- oder Feuchtigkeitssensoren (22, 23), wobei die Sensoren mit einer Anzeige verbunden sind, um es einer Bedienungsperson zu ermöglichen, die Umgebung innerhalb der Struktur zu steuern.

8. Vorrichtung nach Anspruch 7, wobei der Sensoren mit einer Verarbeitungseinrichtung und einer Steuerungseinrichtung verknüpft sind, um die automatische Steuerung der Umgebung innerhalb der Struktur zu ermöglichen.

9. Vorrichtung nach einem der vorstehenden Ansprüche, wobei sich innerhalb der Struktur eine oder mehrere Kameras befinden, um ein visuelles Bild und/oder eine Aufzeichnung des Wachstums der Pflanzen bereitzustellen.

10. Vorrichtung nach einem der vorstehenden Ansprüche, enthaltend eine Pumpe zum Befüllen und Entleeren des Trogs (20) der Nährflüssigkeit (21).

11. Vorrichtung nach einem der vorstehenden Ansprüche, wobei innerhalb der Struktur ein oder mehrere Laser montiert sind.

12. Verfahren zum Anbauen von Pflanzen, wobei das Verfahren die folgenden Schritte umfasst:
(i) Bereitstellen einer Struktur, die ein Volumen einschließt, in welchem eine Kultur während des Anbaus einer Kultur in einer kontrollierten Umgebung gehalten werden kann, wobei der Boden der Struktur aus einem Gebäudedach (11) besteht
und die Struktur aus einer Mehrzahl von Modulen gebildet wird, die so installiert sind, dass sie sich an die Form des Gebäudedachs anpassen, wobei mindestens eines der Module einen einzigen Zugangspunkt umfasst,
(ii) Platzieren einer Pflanze in einem Behälter (19);
(iii) freies Aufhängen des Behälters (19) zwischen zwei Endlosbändern (15), wobei die Bänder in beabstandeter paralleler Beziehung angeordnet und so an einem Antriebskettenrad (16) und eine Mehrzahl von Laufrollenzähnen (17) montiert sind, dass sie eine synchrone Bewegung über einen geschlossenen Pfad ausführen,
(iv) Positionieren der Mehrzahl von Laufrollenzähnen (17) innerhalb des Volumens der Struktur, um sich an die Form des Gebäudedachs (11) anzupassen, auf dem sich die Vorrichtung befindet,
(v) Hinzugeben einer Nährlösung (21) zu einem Trog (20),
(vi) wobei der Pfad der Bänder (15) derart ist, dass er den Behälter (19) und die Pflanze mindestens teilweise in eine Nährlösung (21) taucht und die Pflanze nährt und bewässert und dann den Behälter und die Pflanze aus der Nährlösung (21) entfernt,
(vii) wobei der Pfad in einem Raum eingegrenzt ist, der eine kontrollierte Umgebung aufweist,
(viii) Entfernen einer Kultur aus dem Volumen der Struktur über den einzigen Zugangspunkt.

## Revendications

1. Un appareil pour une utilisation dans la culture d'une récolte de plante, l'appareil comprenant une structure renfermant un volume (12) dans lequel une récolte peut être maintenue dans un environnement contrôlé pendant la culture d'une récolte,
la structure hébergeant deux courroies sans fin (15) en relation parallèle espacée et montées pour un mouvement synchrone sur un trajet fermé,
une auge (20) pour retenir de façon amovible une solution nutritive pour une récolte,
un moyen de suspension pour permettre à un récipient (19) contenant une récolte d'être suspendu entre et de se déplacer avec les courroies,
les trajets des courroies étant de sorte à immerger au moins partiellement le récipient dans une solution nutritive (21) et à alimenter une récolte au moins une fois sur un circuit de courroie complet ;
**caractérisé en ce que** chaque courroie (15) est montée sur une roue d'entraînement (16) et le trajet de chaque courroie (15) est défini par une pluralité de pignons tendeurs (17) ;
où le plancher de la structure est constitué d'un toit de bâtiment (11) et la pluralité de pignons tendeurs (17) peuvent être positionnés à l'intérieur du volume de l'appareil pour s'adapter à la configuration du toit de bâtiment (11) sur lequel l'appareil est situé ; et
où la structure est formée d'une pluralité de modules qui sont installés de façon à s'adapter à la configuration du toit de bâtiment ; où au moins un desdits modules comprend un point d'accès unique à partir duquel des récoltes peuvent être retirées du volume de l'appareil.

2. Un appareil selon la revendication 1, où le moyen de suspension inclut un cadre pour contenir un ou plusieurs récipients (10).

3. Un appareil selon la revendication 1 ou la revendication 2, où le moyen de suspension inclut une barre ou un axe (18) attaché(e) à et s'étendant entre les courroies pour fournir un support stable pour le récipient (19).

4. Un appareil selon n'importe quelle revendication précédente, où les roues d'entraînement (16) sont situées à l'intérieur de la structure.

5. Un appareil selon n'importe quelle revendication précédente, où la pluralité de pignons tendeurs (17) fournissent en outre un support aux courroies (15).

6. Un appareil selon n'importe quelle revendication précédente, où la courroie d'entraînement (15) est une chaîne d'entraînement.

7. Un appareil selon n'importe quelle revendication précédente, où l'appareil inclut des capteurs, tels que des capteurs de température ou d'humidité (22, 23), lesdits capteurs étant connectés à un dispositif d'affichage permettant à un opérateur de contrôler l'environnement à l'intérieur de la structure.

8. Un appareil selon la revendication 7, où les capteurs sont reliés à un moyen de traitement et à un moyen de contrôle pour permettre à l'environnement à l'intérieur de la structure d'être contrôlé automatiquement.

9. Un appareil selon n'importe quelle revendication précédente, où une ou plusieurs caméras sont situées à l'intérieur de la structure pour fournir une image visuelle et/ou un enregistrement de la culture des plantes.

10. Un appareil selon n'importe quelle revendication précédente, incluant une pompe pour remplir et vider l'auge (20) de liquide nutritif (21).

11. Un appareil selon n'importe quelle revendication précédente, où un ou plusieurs lasers sont montés à l'intérieur de la structure

12. Un procédé pour cultiver des plantes, le procédé comprenant les étapes consistant à :
(i) fournir une structure renfermant un volume dans lequel une récolte peut être maintenue dans un environnement contrôlé pendant la croissance d'une récolte, où le plancher de la structure est constitué d'un toit de bâtiment (11) et la structure est formée d'une pluralité de modules qui sont installés de façon à s'adapter à la configuration du toit de bâtiment, au moins un desdits modules comprenant un point d'accès unique,
(ii) placer une plante dans un récipient (19) ;
(iii) suspendre librement le récipient (19) entre deux courroies sans fin (15), lesdites courroies étant agencées en relation parallèle espacée et montées sur une roue d'entraînement (16) et une pluralité de pignons tendeurs (17) pour un mouvement synchrone sur un trajet fermé,
(iv) positionner la pluralité de pignons tendeurs (17) à l'intérieur du volume de la structure pour s'adapter à la configuration du toit de bâtiment (11) sur lequel la structure est située,
(v) ajouter une solution nutritive (21) dans une auge (20),
(vi) le trajet des courroies (15) étant de sorte à immerger au moins partiellement le récipient (19) et la plante dans une solution nutritive (21) pour alimenter et arroser la plante et ensuite à retirer le récipient (19) et la plante de la solution nutritive (21),
(vii) le trajet étant confiné à l'intérieur d'un espace ayant un environnement contrôlé,
(viii) retirer une récolte du volume de la structure via ledit point d'accès unique.
